# EUROPÄISCHE PATENTSCHRIFT

(11) **EP 2 335 878 B1**
(45) Veröffentlichungstag und Bekanntmachung des Hinweises auf die Patenterteilung: **04.05.2016**
(21) Anmeldenummer: 10193017.0
(22) Anmeldetag: 29.11.2010
(51) Int. Cl.: B25B 1/08, B25B 1/18, B25B 1/24, B23Q 1/00, B25J 15/02, B23Q 17/00

(54) **Spann- und Greifvorrichtung und Schnellspanneinheit**
Tensioning and gripping device and quick acting clamping device
Dispositif de serrage et de prise et unité de serrage rapide

(30) Priorität: 27.11.2009 DE 202009018025 U; 10.09.2010 DE 102010045018
(43) Veröffentlichungstag der Anmeldung: 22.06.2011
(73) Patentinhaber: Schunk GMBH & CO.KG Spann-Und Greiftechnik, 74348 Lauffen am Neckar (DE)
(72) Erfinder: Schräder, Philipp, 88512 Mengen (DE); Wäscher, Tobias, 88356 Ostrach (DE); Ebe, Frank, 88499 Riedlingen (DE); Pfeffer, Jens, 72505 Bittelschiess (DE)
(74) Vertreter: DREISS Patentanwälte PartG mbB

(56) Entgegenhaltungen:
- EP-A1- 1 707 307
- EP-A1- 2 052 808
- EP-A2- 1 175 959

## Beschreibung

Die Erfindung betrifft eine Spann- oder Greifvorrichtung, insbesondere auch eine Schnellspanneinheit, mit wenigstens einer in einem Führungsabschnitt verlagerbaren Grundbacke, wobei die Grundbacke über ein Stellelement in eine Spannlage und in eine Freigabelage verlagerbar ist. Die Grundbacke kann auch als Spannschieber bezeichnet werden.

Derartige Spann- oder Greifvorrichtungen sind in vielfältiger Art und Weise vorbekannt. Sie dienen dabei zum Spannen oder Greifen von Gegenständen oder Werkstücken. Die Spann- oder Greifvorrichtungen können dabei insbesondere eine Grundbacke, zwei oder drei Grundbacken, vorsehen. Bei einer Grundbacke wird diese dann relativ zu einem Festanschlag verlagert. Zwei Grundbacken werden entlang einer Bewegungsrichtung aufeinander zu oder voneinander weg bewegt. Drei Grundbacken werden zentrisch aufeinander zu oder voneinander weg bewegt. Zudem ist auch denkbar, dass mehr als drei Grundbacken zum Einsatz kommen. Die Grundbacken werden dann über das Stellglied gemeinsam betätigt. Das Stellglied als solches kann kraftangetrieben sein, beispielsweise über einen elektrischen oder pneumatischen Antrieb.

Bei derartigen Spann- oder Greifvorrichtungen kann es erforderlich sein, festzustellen, in welcher Lage sich die wenigstens eine Grundbacke befindet. Insbesondere ist interessant, ob diese sich in der Spann- und/oder in der Freigabelage befindet. Dazu sind aus dem Stand der Technik elektrische Näherungsschalter bekannt, die das Signal eines an der Grundbacke vorgesehenen Signalgebers, beispielsweise eines Magnets, erfassen. Nachteil derartiger Schalter ist, dass diese zur Versorgung Strom benötigen beziehungsweise dass diese zur Versorgung Strom benötigen beziehungsweise das Stromleitungen zum Übertragen des Schaltsignals erforderlich sind.

Unter den Oberbegriff der Erfindung fallen aber auch Schnellspanneinheiten mit einer zentralen Aufnahme zum Einführen und zum fixierten Spannen eines Spannbolzens. Derartige Schnellspanneinheiten, die auch als Nullpunktspannsysteme bezeichnet werden, sind beispielsweise aus der EP 1 707 307 A1 oder der EP 1 886 751 B1 bekannt. Bei der EP 1 707 307 A1 ist das Stellelement als druckbeaufschlagbarer Kolben ausgebildet, an welchem Stellglieder in Form von Zylinderstiften vorgesehen sind, welche mit der Schrägführung zusammenwirken. Bei der EP 1 886 751 B1 ist als Stellelement ein verschiebliches Zylinderelement vorgesehen, welches zur radialen Bewegungen der Spannschieber mit dem Spannschieber bewegungsgekoppelt ist. Im Betrieb derartiger Schnellspanneinheiten ist es wesentlich, feststellen zu können, ob sich die Spannschieber in der Spannlage oder in der Freigabelage befinden. Aus der EP 2 052 808 A1 ist eine Spanneinrichtung bekannt, bei der die Position einer Backe mit Druckluft abgefragt wird.

Der vorliegenden Erfindung liegt die Aufgabe zugrunde, eine Spann- oder Greifvorrichtung der eingangs genannten Art bereitzustellen, mit der die Spannlage und/oder die Freigabelage bestimmt werden können.

Diese Aufgabe wird gelöst von einer Spann- oder Greifvorrichtung mit den Merkmalen des Anspruchs 1.

Entsprechend der Erfindung ist vorgesehen, dass die Grundbacke einen Backenkanal und der Führungsabschnitt einen an eine Druckluftversorgung anschließbaren Druckluftkanal derart aufweisen, dass die Grundbacke in der Spannlage beziehungsweise in der Freigabelage eine Mündung des Druckluftkanals verschließt und/oder in der Freigabelage beziehungsweise in der Spannlage eine Mündung des Druckluftkanals mit einer Mündung des Backenkanals wenigstens abschnittsweise korrespondiert.

Dadurch, dass in der einen Lage die Mündung des Druckluftkanals verschlossen ist und in der anderen Lage die Mündung des Druckluftkanals wenigstens abschnittsweise mit der Mündung des Backenkanals korrespondiert, kann aus dem Luftdruck und/oder der Strömungsgeschwindigkeit im Druckluftkanal rückgeschlossen werden, in welcher Lage sich die Grundbacke befindet. Dies deshalb, weil der im Druckluftkanal anstehende Luftdruck und/oder die im Druckluftkanal vorherrschende Strömungsgeschwindigkeit der Druckluft in der Freigabelage einen unterschiedlichen Wert aufweist als in der Spannlage. Der Backenkanal führt dabei vorzugsweise zu einem Luftauslass beziehungsweise hat eine Luftauslassmündung. Die Kanäle sind vorzugsweise kreisrund. Ebenso die Mündungen.

Insbesondere dann, wenn das Stellelement pneumatisch, insbesondere über eine Zylinder-Kolben-Einheit verstellt wird, bietet sich die Erfindung an. Dies deshalb, weil dann zur Verstellung des Stellelements Druckluft bereitzustellen ist, mit der die Kolben-Zylinder-Einheit betätigt wird.

Vorteilhaft ist, wenn die Mündung des Druckluftkanals auf der der Unterseite der Grundbacke zugewandten Seite des Führungsabschnitts in die Mündung des Backenkanals auf der Unterseite der Grundbacke vorgesehen ist.

Die Grundbacke sieht vorzugsweise zwei Backenkanäle und der Führungsabschnitt sieht vorzugsweise zwei Druckluftkanäle derart auf, dass der eine Backenkanal mit dem einen Druckluftkanal in der Freigabelage korrespondiert und der andere Backenkanal mit dem anderen Druckluftkanal in der Spannlage korrespondiert. Insofern wird gewährleistet, dass sowohl die Freigabelage als auch die Spannlage sicher detektiert werden kann.

Eine weitere bevorzugte Ausführungsform der Erfindung sieht vor, dass in der Grundbacke ein den Backenkanal wenigstens abschnittsweise bildendes Stellmittel vorgesehen ist, mit dem die Lage der Mündung des Backenkanals relativ zur Mündung des Druckluftkanals verstellbar ist. Die Verstellung erfolgt dabei insbesondere bei stehender Backe. Über die Verstellung kann die Lage der Freigabelage und/oder die Lage der Spannlage der Grundbacke verstellt werden. Die Lage der Spannlage beziehungsweise die Lage der Freigabelage ist dadurch voreinstellbar. Dies kann insbesondere dann von Bedeutung sein, wenn unterschiedlich große Werkstücke oder Gegenstände zu greifen oder spannen sind. Je nach dem zu greifenden Gegenstand oder zu greifenden Werkstück kann folglich insbesondere die Spannlage genau auf die Größe des jeweiligen Gegenstandes beziehungsweise Werkstücks eingestellt werden.

Das Stellmittel kann dabei als ein senkrecht zur Verfahrrichtung der Grundbacke, um eine Drehachse verdrehbarer Stellbolzen ausgebildet sein, der auf der dem Druckluftkanal zugewandten Seite eine Mündung aufweist, die durch Verdrehen des Stellbolzens ihre relative Lage ändert. Die Mündung kann dabei insbesondere exzentrisch zur Drehachse sein, so dass bei Verdrehen des Stellbolzens die Mündung auf einer Kreisbahn liegt.

Alternativ ist denkbar, dass das Stellmittel entlang der Verfahrrichtung der Backen einstellbar ist. Das Stellmittel kann dabei beispielsweise als Stellschieber ausgebildet sein.

Vorteilhafterweise sieht der Stellbolzen auf der seiner Mündung abgewandten Seite eine Auslassöffnung vor, die mit dem grundbackenseitigen Abschnitt des Backenkanals korrespondiert. Der Stellbolzen beziehungsweise die Grundbacke sind dabei derart ausgebildet, dass unabhängig von der Drehlage des Stellbolzens die Auslassöffnung stets mit dem grundbackenseitigen Abschnitt des Backenkanals verbunden ist.

Zum Verdrehen des Stellbolzens kann ein Betätigungsmittel vorgesehen sein. Das Betätigungsmittel kann dabei insbesondere als verdrehbar gelagerte Spindel ausgebildet sein, die einen Ritzelabschnitt des Stellbolzens kämmt. Die Drehachsen des Stellbolzens und des Betätigungsmittels verlaufen dabei insbesondere senkrecht zueinander. Das Betätigungsmittel kann insbesondere einen handbetätigbaren, zugänglichen Eingriffsabschnitt aufweisen, insbesondere für den Eingriff eines Schraubendrehers. Hierdurch kann das Betätigungsmittel auf einfache Weise verstellt werden. Die Übersetzung zwischen der Bewegung des Betätigungsmittels und des Stellbolzens ist dabei vorzugsweise größer Eins und insbesondere größer Drei, so dass eine Feineinstellung des Stellbolzens über das Betätigungsmittel möglich wird.

Der Druckluftkanal im Führungsabschnitt kann mehrere Mündungen aufweisen. Diese Mündungen können insbesondere dazu vorgesehen sein, um mit unterschiedlichen Mündungen unterschiedlicher in den Führungsabschnitt einsetzbarer Grundbacken zu korrespondieren. Die Greif- oder Spannvorrichtung kann folglich mit unterschiedlichen Grundbacken betrieben werden, je nachdem, was für Gegenstände beziehungsweise Werkstücke zu Spannen oder Greifen sind. Insofern können für unterschiedliche Grundbacken unterschiedliche Mündungen des Druckluftkanals Verwendung finden.

Ferner ist vorteilhaft, wenn im oder am Druckluftkanal eine Drossel zur definierten Einstellung des Luftablasses vorgesehen ist. Hierdurch kann beim Korrespondieren des Druckluftkanals mit dem Backenkanal ein vorgebbarer Druckunterschied eingestellt werden.

Ferner ist vorteilhaft, wenn Messmittel zur Messung des Drucks und/oder der Strömungsgeschwindigkeit der Druckluft im Druckluftkanal vorgesehen sind, und wenn eine Auswerteeinheit vorgesehen ist, mit der aufgrund der gemessenen Werte bestimmbar ist, ob sich die Grundbacke in der Spannlage und/oder in der Freigabelage befindet. Die Messmittel und/oder die Auswerteeinheit können dabei an der Greif- oder Spannvorrichtung angeordnet sein oder auch in diese integriert sein.

Zur Bewegungskopplung der wenigstens einen Grundbacke mit dem Stellelement kann eine Mechanik, insbesondere eine Schrägführung, vorgesehen sein, so dass bei axialem Verstellen des Stellelements die Grundbacke quer dazu, beziehungsweise in radialer Richtung, verstellt wird. Die Schrägführung kann dabei Abschnitte unterschiedlicher Steigung aufweisen, so dass ein Eil- beziehungsweise Kraftgang bereitgestellt werden kann.

Wie bereits eingangs erwähnt ist vorteilhaft, wenn zwei oder drei aufeinander zu und voneinander weg bewegbare Grundbacken vorgesehen sind, die dann über ein gemeinsames Stellglied verlagerbar sind.

Entsprechend der Erfindung kann desweiteren vorgesehen sein, dass die wenigstens eine Grundbacke bzw. der wenigstens eine Spannschieber einen Staudruckabschnitt und das Gehäuse einen Druckluftkanal derart aufweisen, dass der Staudruckabschnitt mit dem Druckluftkanal so korrespondiert, dass der im Druckluftkanal anstehende Luftdruck und/oder die im Druckluftkanal vorherrschende Strömungsgeschwindigkeit in der Freigabelage unterschiedliche Werte aufweist als in der Spannlage. Aus den unterschiedlichen Werten kann rückgeschlossen werden, ob sich die Grundbacke bzw. der Spannschieber in der Spannlage oder in der Freigabelage befindet.

Auch wenn im Nachfolgenden von Spannschiebern die Rede ist, sind damit Grundbacken im Sinne der Erfindung zu verstehen.

Insbesondere ist vorteilhaft, wenn in der Freigabelage des Spannschiebers der Druckluftkanal vollständig mit dem Staudruckabschnitt korrespondiert, ihn insbesondere wenigstens weitgehend dicht verschließt, so dass im Wesentlichen keine Druckluft aus dem Druckluftkanal abströmen kann. In der Spannlage ist dann vorgesehen, dass Luft aus dem Druckluftkanal entweichen kann. Wird ein Druckluftabfall im Druckluftkanal festgestellt, so kann hieraus rückgeschlossen werden, dass sich dann der wenigstens eine Spannschieber nicht in der Freigabelage befindet und dass folglich dann der Spannbolzen nicht aus der zentralen Aufnahme herausnehmbar ist.

Insbesondere ist vorteilhaft, wenn der Staudruckabschnitt von Dichtmitteln begrenzt beziehungsweise umschlossen ist. Hierdurch kann auf einfache Art und Weise gewährleistet werden, dass dann, wenn der Druckluftkanal mit dem Staudruckabschnitt korrespondiert, keine Druckluft entweichen kann.

Ferner ist denkbar, dass bei mit dem Druckluftkanal nicht korrespondierendem Staudruckabschnitt Druckluft über einen zwischen dem Führungsabschnitt und dem Spannschieber vorgesehenen Passungsspalt entweichen kann. Der Backenkanal ist dann als Ringkanal ausgebildet. Aufgrund der verschieblichen Anordnung des wenigstens einen Spannschiebers im Gehäuse ist die Passung zwischen Gehäuse und Spannschieber so zu wählen, dass der Spannschieber zum einen sicher geführt wird und zum anderen leichtgängig im Gehäuse läuft. Folglich ist ein entsprechender Passungsspalt vorzusehen. Über diesen Passungsspalt kann dann Druckluft entweichen, wenn der Staudruckabschnitt den Druckluftkanal nicht verschließt. Der Passungspalt übernimmt dann die Funktion des Backenkanals bzw. der Backenkanal ist dann als Passungsspalt ausgebildet.

Bei der Erfindung ist ferner denkbar, dass bei mit dem Druckluftkanal korrespondierendem Staudruckabschnitt geringfügig Druckluft aus dem Druckluftkanal abströmen kann und das bei mit dem Druckluftkanal nicht korrespondierendem Staudruckabschnitt der Druckluftkanal großflächig freigegeben wird. Auch bei einer derartigen Ausführungsform wird gewährleistet, dass die Druck- beziehungsweise Strömungsverhältnisse zwischen Freigabelage und Spannlage deutlich unterschiedlich sind, so dass aus diesen auf die jeweilige Lage rückgeschlossen werden kann.

Dabei ist denkbar, dass bei mit dem Druckluftkanal korrespondierendem Staudruckabschnitt Druckluft über einen zwischen dem Führungsabschnitt und dem Spannschieber vorgesehenen Passungsspalt entweichen kann. Der Passungspalt übernimmt dann die Funktion des Backenkanals bzw. der Backenkanal ist dann als Passungsspalt ausgebildet. Wie bereits erwähnt, ist ein derartiger Passungsspalt vorteilhaft, um ein leichtgängiges Bewegen des Spannschiebers im Gehäuse ermöglichen zu können.

Zur großflächigen Freigabe des Druckluftkanals, wenn dieser nicht mit dem Staudruckabschnitt korrespondiert, kann erfindungsgemäß vorgesehen sein, dass der Spannschieber beziehungsweise der Führungsabschnitt eine zurückversetzte Schulter derart aufweist, dass der Druckluftkanal bei mit dem Druckluftkanal nicht korrespondierendem Staudruckabschnitt großflächig freigegeben wird. Eine derartige Ausbildung kann auf einfache Weise realisiert werden. Ob die zurückversetzte Schulter am Spannschieber oder am Führungsabschnitt vorzusehen ist, hängt von der jeweiligen konkreten Ausgestaltung der erfindungsgemäßen Schnellspanneinheit ab. Falls die Schulter am Spannschieber vorgesehen ist, kann sie durch eine Querschnittsreduzierung des Spannschiebers oder auch durch eine Abflachung am Spannschieber realisiert sein.

Bei einer weiteren Ausgestaltung der Erfindung ist vorgesehen, dass der Spannschieber beziehungsweise der Führungsabschnitt einen Ablasskanal aufweisen, der in der Freigabelage oder in der Spannlage mit dem Druckluftkanal korrespondiert. Über einen derartigen Ablasskanal kann gezielt Druckluft an eine definierte vorgegebene Stelle abgelassen werden. Insbesondere in der Freigabelage, bei der höhere Strömungsgeschwindigkeiten vorgesehen sind, kann es sinnvoll sein, die Luft gezielt abzulassen.

Ferner ist denkbar, dass im Ablasskanal eine Drossel zur definierten Einstellung des Luftablasses vorgesehen ist. Über die Drossel kann insbesondere dann, wenn der Ablasskanal im Bereich des Staudrucksabschnitts vorgesehen ist, ein definiertes Ablassen von Druckluft bereitgestellt werden, wenn der Druckluftkanal mit dem Staudruckabschnitt korrespondiert.

Vorteilhaft ist ferner, wenn der Staudruckabschnitt und der Druckluftkanal derart angeordnet sind, dass erst bei endgültigem Erreichen der Freigabelage der Druckluftkanal mit dem Staudruckabschnitt korrespondiert und dass mit dem Verlassen der Freigabelage der Druckluftkanal nicht mehr mit dem Staudruckabschnitt korrespondiert. Damit kann sichergestellt werden, dass dann, wenn die Freigabelage endgültig erreicht ist, dies zuverlässig feststellbar ist. Ein sicheres Einführen oder Entnehmen des Spannbolzens kann dadurch gewährleistet werden.

Ferner ist vorteilhaft, wenn Druckmessmittel zur Messung des Drucks oder der Strömungsgeschwindigkeit im Druckluftkanal vorgesehen sind, und wenn eine Auswerteeinheit vorgesehen ist, wobei mit der Auswerteeinheit aufgrund der gemessenen Werte bestimmbar ist, ob sich der Spannschieber in der Spannlage oder in der Freigabelage befindet. Vorteil dieser Ausbildung ist, dass die Druckmessmittel an dem dem wenigstens einen Spannschieber abgewandten Ende des Druckluftkanals oder auch an einer sich an den Druckluftkanal anschließenden Schlauchverlängerung vorgesehen sein können. Die Druckmessmittel können folglich fern vom Spannschieber angebracht werden. Insofern beeinflussen die Druckmessmittel den von der Schnellspanneinheit beanspruchten Bauraum nicht. Über eine entsprechende Auswerteeinheit, die ebenfalls fern von den Druckmessmitteln angeordnet sein kann, kann rückgeschlossen werden, in welcher Lage sich der Spannschieber befindet. Erfindungsgemäß ist denkbar, dass die Druckmessmittel und die Auswerteeinheit in einem gemeinsamen Gehäuse vorgesehen sind, um insbesondere Bauraum einzusparen.

Der Staudruckabschnitt kann insbesondere als Ringabschnitt ausgebildet sein, der von zwei Dichtringen umschlossen ist. Vorteilhafterweise weist der wenigstens eine Spannschieber dann einen insbesondere runden, und vorzugsweise kreisrunden, Querschnitt auf, in welchem Ringnuten für die beiden Dichtringe vorgesehen sind. Eine derartige Ausgestaltung hat den Vorteil, dass der Staudruckabschnitt auf einfache Art und Weise bereitstellbar ist. Die Dichtringe dichten dabei den Spannschieber gegenüber dem dem Spannschieber gegenüberliegenden Gehäuseabschnitt des Gehäuses ab.

Der Staudruckabschnitt kann dabei insbesondere eine sich in radialer Richtung erstreckende Breite B_{S} aufweisen, die gleich breit oder nur geringfügig breiter ist als die sich in radialer Richtung erstreckende Breite B_{D} des Druckluftkanals, wobei insbesondere gilt: B_{S} = 1,1 bis 1.5 * B_{D}. Aufgrund der lediglich geringfügig breiteren Ausbildung des Staudruckabschnitts als des Druckluftkanals wird gewährleistet, dass der Bereich, innerhalb welchem der Druckluftkanal vom Staudruckabschnitt verschlossen wird, vergleichsweise klein ist. Nur dann, wenn der Staudruckabschnitt mit dem Druckluftkanal korrespondiert, kann im Wesentlichen keine Luft aus dem Druckluftkanal ausströmen. Daraus folgt wiederum, dass vergleichsweise genau bestimmt werden kann, wann der Spannschieber, beziehungsweise dessen Staudruckabschnitt, mit dem Druckluftkanal korrespondiert. Nur dann, wenn dies gewährleistet ist, kann insbesondere auf die vollständige Freigabelage rückgeschlossen werden.

Der Staudruckabschnitt ist vorzugsweise in dem der zentralen Aufnahme abgewandten Abschnitt des Spannschiebers vorgesehen. Dies ist deshalb vorteilhaft, weil hier Bauraum zum Vorsehen des Druckluftkanals zur Verfügung steht.

Der Druckluftkanal kann dabei insbesondere senkrecht zur Bewegungsrichtung des Spannschiebers verlaufen. Hierdurch ergeben sich günstige Strömungsverhältnisse beziehungsweise günstige Abdichtverhältnisse zwischen Staudruckabschnitt und Druckluftkanal.

Eine weitere vorteilhafte Ausführungsform sieht vor, dass die Schrägführung Abschnitte unterschiedlicher Steigung aufweist. Hieraus resultiert, dass bei gleichförmiger Bewegung des Stellelements in axialer Richtung unterschiedliche Geschwindigkeiten der Bewegung des wenigstens einen Spannschiebers in radialer Richtung resultieren. Der Spannschieber kann folglich vorzugsweise in einem Eillauf und, zum fixierten Spannen des Spannbolzens, in einem Kraftlauf bewegt werden.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert sind.

Es zeigen:
- Figur 1: einen Teillängsschnitt einer ersten Ausführungsform in der Freigabelage;
- Figur 2: einen Teillängsabschnitt der Ausführungsform gemäß Figur 1 in der Spannlage;
- Figur 3: eine isometrische Ansicht einer weiteren Ausführungsform;
- Figur 4: einen Teilschnitt der Ausführungsform gemäß Figur 3;
- Figur 5: die Draufsicht auf die Ausführungsform gemäß Figur 3 ohne Grundbacken;
- Figur 6: eine der Figur 5 entsprechende Ansicht im Teilschnitt;
- Figur 7: einen Teillängsschnitt durch die Ausführungsform gemäß Figur 3 in der Freigabelage entlang der Linie VII in Figur 9;
- Figur 8: die Ansicht gemäß Figur 7 in der Spannlage;
- Figur 9: eine der Figur 6 entsprechende Ansicht in einer anderen Schnittebene;
- Figur 10: einen Schnitt durch die Ansicht gemäß Figur 9 entlang der Linie X;
- Figur 11: einen Längsschnitt durch eine weitere Schnellspanneinheit in der Freigabelage;
- Figur 12: einen vergrößerten Ausschnitt aus der Figur 11;
- Figur 13: den Schnitt gemäß Figur 11 in der Spannlage;
- Figur 14: einen vergrößerten Ausschnitt aus Figur 13;
- Figur 15: einen Teilausschnitt einer weiteren erfindungsgemäßen Schnellspanneinheit;
- Figur 16: einen Teilausschnitt einer weiteren erfindungsgemäßen Schnellspanneinheit; und
- Figur 17: einen Teilausschnitt einer weiteren erfindungsgemäßen Spanneinheit.

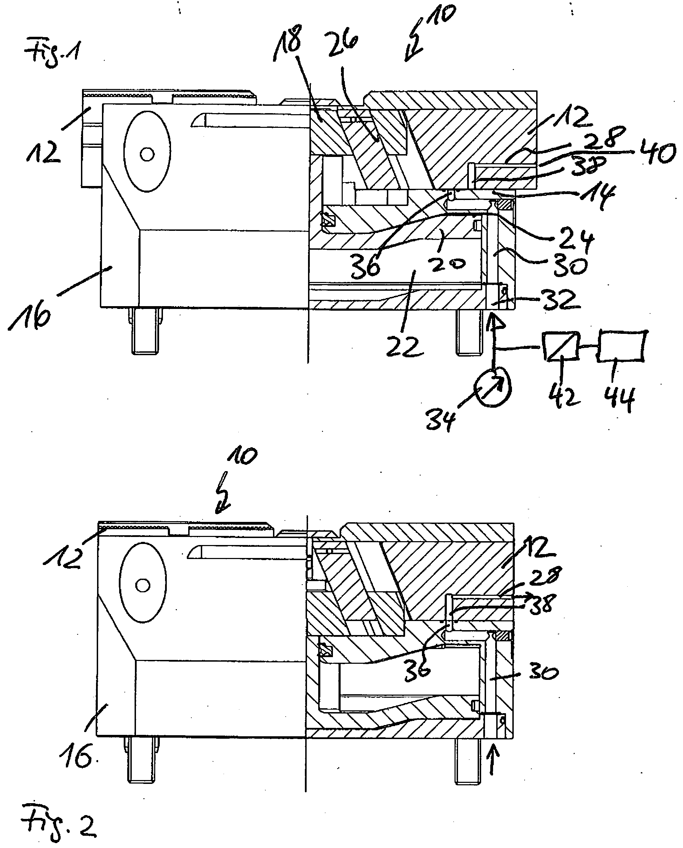

In der Figur 1 und 2 ist eine Spann- bzw. Greifvorrichtung 10 gezeigt, die zwei Grundbacken 12 aufweist, die aufeinander zu und voneinander weg verlagerbar sind. Die Grundbacken 12 sind dabei in Führungsabschnitten 14 eines Grundgehäuses 16 verschiebbar gelagert. Die Grundbacken 12 sind über ein gemeinsames Stellglied 18 mit einem in axialer Richtung verlagerbaren Kolben 20 bewegungsgekoppelt. Der Kolben 20 begrenzt druckbeaufschlagbare Pneumatikräume 22 und 24, welche je nach Druckbeaufschlagung den Kolben 20 bewegen. Das Stellglied 18 ist mit den Backen 12 über einen Schrägzug 26 derart bewegungsgekoppelt, dass beim axialen Bewegen des Stellglieds 18 die Backen 12 in radialer Richtung aufeinander zu beziehungsweise voneinander weg bewegt werden. Die Spann- bzw. Greifvorrichtung 10 kann grundsätzlich für Innenspannung (Grundbacken 12 aufeinander zu bewegt, Spannlage innen) oder Außenspannung (Grundbacken 12 voneinander weg bewegt, Spannlage außen) verwendet werden.

Wie im Schnitt deutlich zu erkennen ist, weist die Grundbacke 12 einen Backenkanal 28 auf. Der Führungsabschnitt 14 beziehungsweise das Grundgehäuse 16 weisen einen Druckluftkanal 30 auf. Das der Grundbacke 12 abgewandte freie Ende 32 des Druckluftkanals 30 ist an eine Druckluftversorgung 34 anschließbar, die in Figur 1 schematisch dargestellt ist. Auf der der Druckluftversorgung 34 abgewandten Seite sieht der Druckluftkanal 30 eine Mündung 36 vor. Entsprechend weist der Backenkanal 28 auf seiner dem Druckluftkanal 30 zugewandten Seite eine Mündung 38 auf. Das der Mündung 38 abgewandte Ende 40 des Backenkanals endet im Freien.

Die Lage der Mündung 36 des Druckluftkanals 30 und die Lage der Mündung 38 des Backenkanals 28 sind dabei derart gewählt, dass sie in der in Figur 2 dargestellten Spannlage miteinander korrespondieren. In der in der Figur 1 dargestellten Freigabelage verschließt die Grundbacke 12 die Mündung 36 des Druckluftkanals 30. Hierdurch bildet sich im Betrieb im Druckluftkanal 30 aufgrund der Druckluftversorgung 34 ein Staudruck. Dieser Staudruck kann über in Figur 1 dargestellte Messmittel 42 gemessen und von einer Auswerteeinheit 44 ausgewertet werden. Bei Erreichen der Spannlage, wie sie in Figur 2 dargestellt ist, korrespondiert die Mündung 38 mit der Mündung 36. Hierdurch kann im Druckluftkanal 30 anstehende Druckluft über die Öffnung 40 entweichen. Der Druck im Druckluftkanal 30 fällt. Dies kann über die Messmittel 42 beziehungsweise die Auswerteeinheit 44 detektiert werden. Insofern kann über die Höhe des Drucks im Druckluftkanal 30 rückgeschlossen werden, ob sich die Grundbacke 12 in der Spannlage, wie es in Figur 2 dargestellt ist, befindet oder nicht.

Anstelle der Messung des Drucks im Druckluftkanal 30 ist auch denkbar, die Strömungsgeschwindigkeit im Druckluftkanal 30 zu messen. Ferner ist denkbar, dass im Bereich des Endes 40 des Backenkanals 28 eine Drossel vorgesehen ist, mit der eine Einstellung eines definierten Luftdruckes im Druckluftkanal 30 erfolgen kann, dann wenn der Druckluftkanal 30 mit dem Backenkanal 28 korrespondiert.

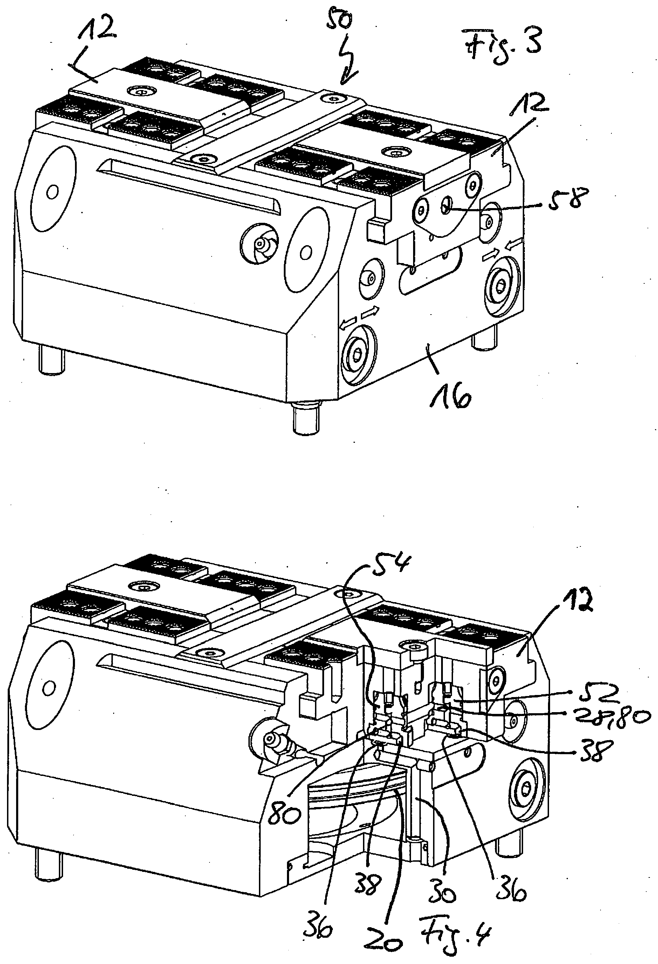

Die in den Figuren 3 bis 10 dargestellte Spann- bzw. Greifvorrichtung 50 entspricht im Wesentlichen der Spann- bzw. Greifvorrichtung 10 gemäß den Figuren 1 und 2. Entsprechende Bauteile sind mit entsprechenden Bezugszeichen versehen.

Wie aus dem Schnitt gemäß Figur 4 deutlich wird, sind in der Grundbacke 12 zwei Stellmittel in Form von Stellbolzen 52, 54 vorgesehen, wobei jeder Stellbolzen 52, 54 einen Abschnitt 80 eines eigenen Backenkanals 28 bildet. Die Stellbolzen 52 und 54 sind dabei als identische Bauteile ausgeführt. Die Mündung 38 des jeweiligen Backenkanals 28 ist im jeweiligen Stellbolzen 52, 54 vorgesehen. Die Stellbolzen 52, 54 sind derart drehbar in der Grundbacke 12 so gelagert, dass die Lage der jeweiligen Mündung 38 zur Lage der jeweils zugehörigen Mündung 36 des Druckluftkanals 30 verstellbar ist.

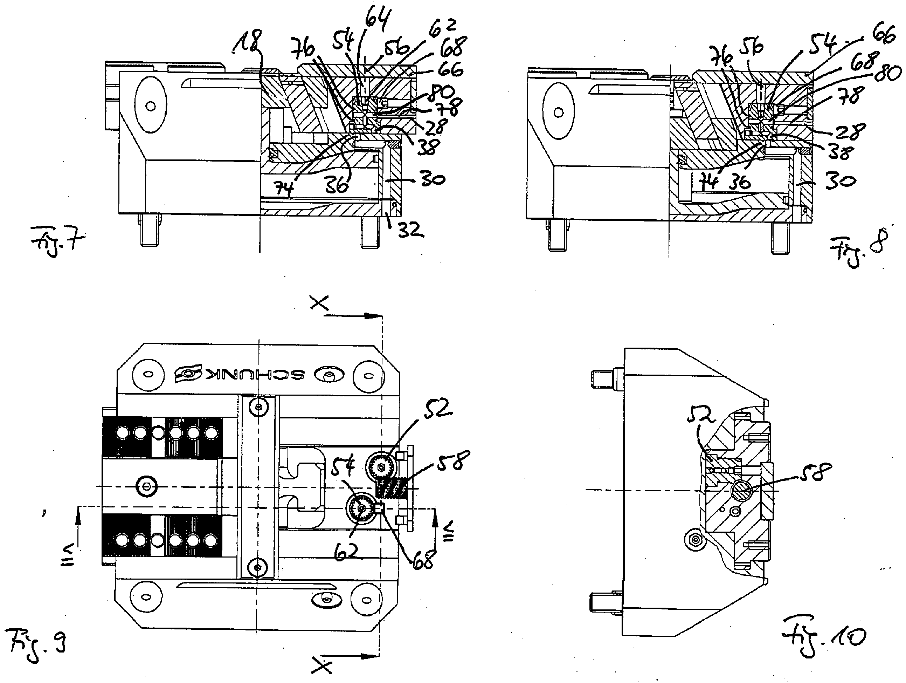

Bei der Spann- bzw. Greifvorrichtung 50 ist die Spannlage diejenige Lage, bei der die Backen ausgefahren sind. Die Spannlage kann über den Stellbolzen 52 eingestellt werden. Die Spannlage ist gezeigt in Figuren 3, 4, 7, 9. Die Freigabelage ist diejenige Lage, bei der die Backen eingefahren sind. Der Stellbolzen 54 korrespondiert hier mit dem zugehörigen Druckluftkanal 30, wie es in Figur 8 gezeigt ist.

In der in der Figur 4 dargestellten Spannlage korrespondiert die Mündung 38 des Stellbolzens 52 mit der zugehörigen Mündung 36 des Durckluftkanals 30. Insofern kann hier diese Spannlage detektiert werden, da über den Backenkanal 28 Druckluft abströmen kann. Der andere Stellbolzen 54 verschließt, wie aus Figur 7 deutlich wird, die Mündung 36 in der in der Figur 4 gezeigten Lage. Beim Aufeinander-zu-Bewegen der Grundbacken 12 korrespondiert dann in der Freigabelage die Mündung 38 des Stellbolzens 54 mit der Mündung 36 des Druckluftkanals 30, wie es in der Figur 8 dargestellt ist. Die Druckluft kann aus dem Druckluftkanal 30 über den Stellbolzen 54 aus dem Backenkanal 28 abströmen.

Zur Verstellung der Lage der jeweiligen Mündung 38 der beiden Stellbolzen 52 und 54 können diese jeweils um ihre Mittellängsachse 56 verdreht werden. Zur Verdrehung des Stellbolzens 52 ist, wie aus Figur 9 deutlich wird, eine verdrehbar gelagerte Spindel 58 vorgesehen, die einen Ritzelabschnitt 60 des Stellbolzens 52 kämmt. Durch Verdrehen der Gewindespindel 58 kann folglich der Stellbolzen 52 verdreht werden.

Zur Verdrehung des anderen Stellbolzens 54 weist dieser an seiner oberen Seite einen Angriffsabschnitt 62 auf, in welchen ein Schraubendreher einführbar ist. Axial oberhalb des Angriffsabschnitts 62 sieht die Backe 12 eine Bohrung 64 auf, welche mit einer Abdeckleiste 66 abgedeckt ist. Nach dem Abnehmen der Abdeckleiste 66 kann von axial oben der Stellbolzen 54 verdreht werden. Zum dauerhaften Festsetzen des Stellbolzens 54 ist in der Grundbacke 12 eine Madenschraube 68 vorgesehen, welche gegen den Stellbolzen 54 derart geschraubt werden kann, dass dieser in seiner Lage geklemmt gehalten wird.

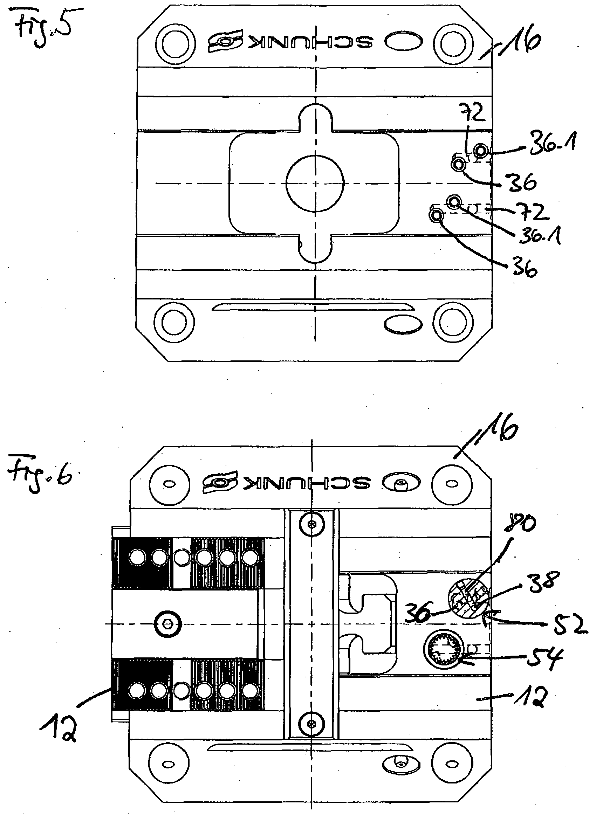

In der Figur 6 ist der Stellbolzen 54 im Querschnitt mit einem ihn abschnittsweise quer durchdringenden Kanalabschnitt 80 gezeigt. An dem einen Ende des Kanalabschnitts 80 ist die Mündung 38 des Backenkanals 28 dargestellt, die in der entsprechenden Lage der Grundbacke 12 mit der Mündung 36 des Druckluftkanals 30 korrespondiert. Die unterhalb des Stellbolzens 52 liegende Mündung 36 ist in Figur 6 strichpunktiert angedeutet. In Figur 5 ist die Mündung 36 deutlich zu erkennen, da die Backe nicht gezeigt ist. Auf der der Mündung 38 abgewandten Seite korrespondiert der Kanalabschnitt 80 mit einem backenseitigen Kanalabschnitt 78. Der jeweilige, stellbolzenseitige Kanalabschnitt 80 des Backenkanals 28 ist dabei derart ausgebildet, dass er in jeder Drehlage des Stellbolzens 52, 54 mit dem grundbackenseitigen Abschnitt 78 korrespondiert.

Bei der Spann- bzw. Greifvorrichtung 50 wird folglich der Backenkanal von einem stellbolzenseitigen Kanalabschnitt 80 und einem grundbackenseitigen Kanalabschnitt 78 gebildet.

Wird die in Figur 6 dargestellte Backe 12 nach links hin zur anderen Backe bewegt, so korrespondiert in der Spannlage die Mündung 38 mit der Mündung 36. Durch Verdrehen des Stellbolzens 52 kann, wie aus Figur 6 deutlich wird, die Lage der Mündung 38 bezüglich der Mündung 36 verstellt. Beim Verdrehen des Stellbolzens 52 im Uhrzeigersinn rückt die Mündung 38 entlang einer Kreisbahn näher an die Mündung 36. Insofern ist dann die Spannlage früher erreicht. Je nach Größe des zu spannenden Gegenstandes kann folglich die Spannlage durch Verdrehen des Stellbolzens 52, beziehungsweise der mit dem Stellbolzen 52 bewegungsgekoppelten Drehspindel 58, eingestellt werden.

Entsprechend kann die Drehlage des Stellbolzens 54 über deren Angriffsabschnitt 62 eingestellt werden, um die Freigabelage genau vorgeben zu können.

Aus Figur 5 wird deutlich, dass im Bereich des Stellbolzens 52 und im Bereich des Stellbolzens 54 jeweils zwei miteinander durch jeweils einen Kanal 72 miteinander in Verbindung stehende Mündungen 36 und 36.1 vorgesehen sind. Das Vorsehen mehrerer Mündungen 36, 36.1 hat den Vorteil, dass unterschiedliche Grundbacken 12 für insbesondere unterschiedliche Greifaufgaben im gleichen Grundgehäuse 16 Verwendung finden können. Je nach der zu verwendenden Grundbacke 12 kommen dann entweder die Mündungen 36 oder die Mündungen 36.1 als mit den grundbackenseitigen Mündungen 38 korrespondierende Mündungen zum Einsatz.

An der in den Figuren 3 bis 10 dargestellten Spann- bzw. Greifvorrichtung 50 sind im Betrieb, entsprechend der Spann- bzw. Greifvorrichtung 10, nicht dargestellte Messmittel 42 und eine Auswerteeinheit 44 vorgesehen.

Zur besseren Abdichtung sind um die Mündungen 36 herum in den Figuren 7 und 8 angedeutete Dichtringe 74 vorgesehen. Ferner sind an den Stellbolzen 52 und 54 ebenfalls Dichtringe 76 vorhanden.

Das Vorsehen von insgesamt zwei Backenkanälen 28 und dem jeweils zugehörigen Stellbolzen 52, 54 und das Vorsehen der zugehörigen Druckluftkanäle 30 hat den Vorteil, dass zum einen in der Spannlage eine backenseitige Mündung 38 mit einer grundgehäuseseitigen Mündung 36 korrespondiert und in der Freigabelage die andere Mündung 38 mit der anderen Mündung 36 korrespondiert. Damit können beide Lagen, die Freigabelage und die Spannlage, positiv detektiert werden. Beide Lagen können auch, wie oben beschrieben, eingestellt werden.

Zudem kann bei der Spann- bzw. Greifvorrichtung 50 insbesondere ein Erkennen der Spannlage durch Verdrehen der Spindel 58 beziehungsweise des Stellbolzens 52 auf einfache Art und Weise eingestellt und auch verstellt werden.

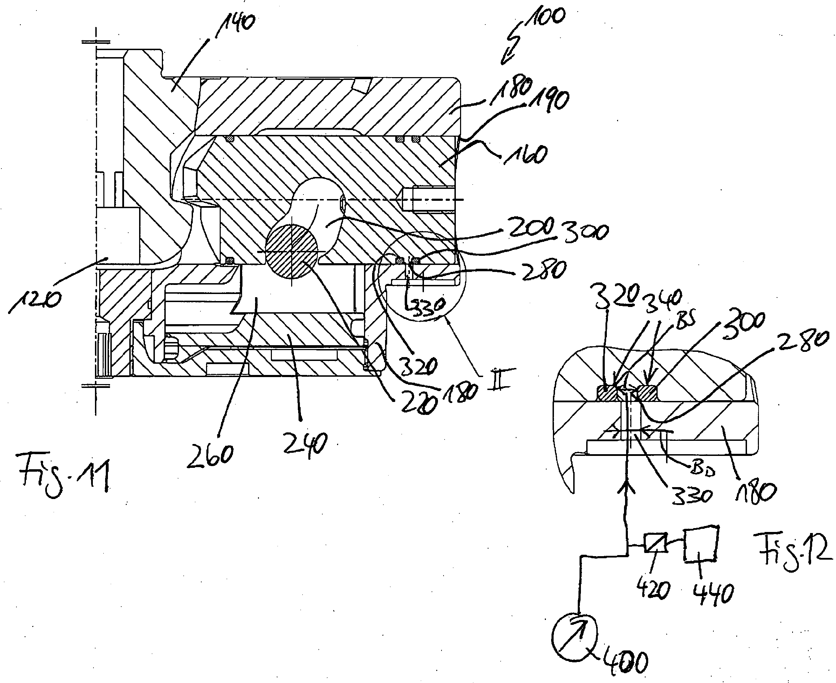

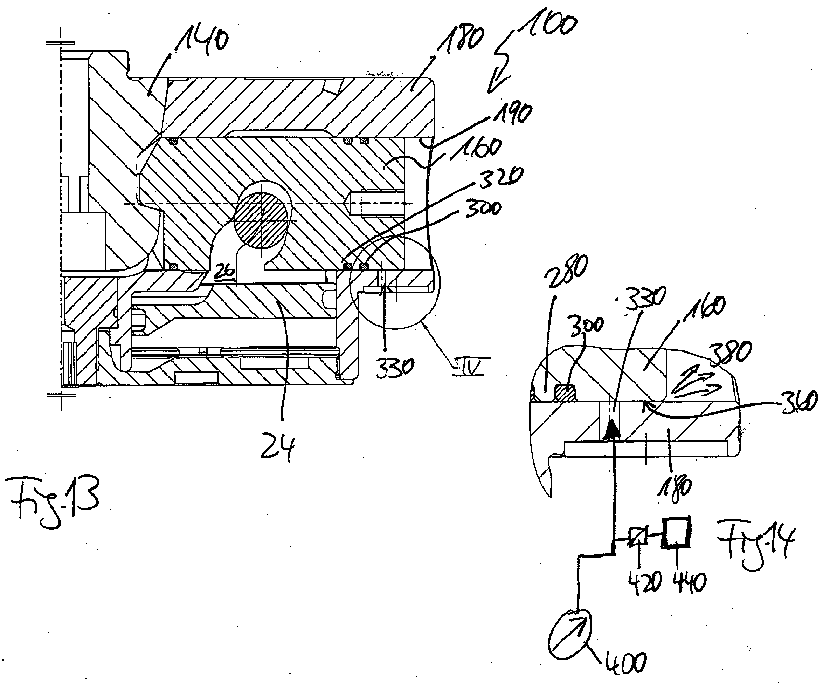

In der Figur 11 ist die rechte Hälfte einer insbesondere symmetrisch ausgebildeten Schnellspanneinheit 100 im Schnitt dargestellt. Die Schnellspanneinheit 100 umfasst eine zentrale Aufnahme 120, in welcher in der Figur 11 ein Spannbolzen 140 angeordnet ist. Die Schnellspanneinheit 100 umfasst ferner einen in der Figur 11 gezeigten Spannschieber 160, der zwischen einer radial außen gelegenen Freigabelage, wie sie in Figur 11 gezeigt ist, und einer radial innen gelegenen Spannlage, wie sie in Figur 13 gezeigt ist, verlagerbar ist. In der in der Figur 11 gezeigten Freigabelage des Spannschiebers 160 kann der Spannbolzen 140 in nach axial oben gewandter Richtung aus der Schnellspanneinheit 100, beziehungsweise deren Aufnahme 120, herausgeführt werden.

Der Spannschieber 160 ist in einem Führungsabschnitt 190 des Gehäuses 180 der Schnellspanneinheit 100 in radialer Richtung verschieblich gelagert. Der Spannschieber 160 ist über eine Schrägführung 200 mit einem Stellglied 220 bewegungsgekoppelt, welches an einem Stellelement in Form eines Kolbens 240 befestigt ist. Der Kolben 240 ist insbesondere einseitig druckbeaufschlagbar und begrenzt den Druckraum 260. Um den Spannschieber 160 in die in der Figur 11 gezeigte Freigabelage zu überführen, wird folglich der Druckraum 260 mit Druckluft beaufschlagt. Der Kolben 240 bewegt sich hierdurch in axialer Richtung nach unten.

Wie aus den Figuren 11 und 13 deutlich wird, sieht die Schrägführung 200 Abschnitte unterschiedlicher Steigung auf. Hierdurch wird erreicht, dass aus einer gleichförmigen Bewegung des Kolbens 240, beziehungsweise des daran fest angeordneten Stellglieds 220, der Spannschieber 160 mit unterschiedlichen Übersetzungsverhältnissen bewegt wird.

Wird der Druckraum 260 drucklos geschalten, so wird der Kolben 240 insbesondere über nicht dargestellte Federmittel nach axial oben verlagert. Entsprechend bewegt sich das Stellglied 220 nach axial oben. Über die Schrägführung wird dann der Spannschieber 160 in die radial innen liegende Spannlage bewegt, wie sie in der Figur 13 dargestellt ist. Einzelheiten hierzu können insbesondere der Figurenbeschreibung zur EP 1 707 307 A1 entnommen werden, welche eine Schnellspanneinheit mit einem ähnlichen Aufbau beschreibt.

Der in den Figuren 11 und 13 dargestellte Spannschieber 160 weist in dem der zentralen Aufnahme abgewandten Abschnitt einen Staudruckabschnitt 280 auf, welcher von zwei umlaufenden Dichtringen 300, 320 begrenzt wird. Der Spannschieber 160 weist eine im Querschnitt insbesondere kreisförmige Kontur auf. Die beiden Dichtringe 300, 320 begrenzen folglich einen kreisringförmigen Staudruckabschnitt 280. Im Gehäuse 180 ist ein Druckluftkanal 330 vorgesehen, der insbesondere in den vergrößerten Ausschnitten 2 und 4 deutlich zu erkennen ist. In der Freigabelage des Spannschiebers 160, wie es in Figur 11 und 12 dargestellt ist, mündet der Druckluftkanal 330 im Staudruckabschnitt 280. Die im Druckluftkanal 330 anstehende Druckluft kann folglich nicht entweichen, da der Staudruckabschnitt von den Dichtringen 300, 320, welche einerseits in am Spannschieber 160 vorgesehenen Ringnuten 340 dicht anliegen und andererseits am Gehäuse 180 ebenfalls dicht anliegen.

In der in der Figur 13 und 14 gezeigten Spannlage des Spannschiebers 160 korrespondiert der Staudruckabschnitt 280 nicht mit dem Druckluftkanal 330. Die im Druckluftkanal 330 anstehende Druckluft kann folglich über den zwischen dem Spannschieber 160 und dem Gehäuse 180 vorgesehenen Passungsspalt 360 entweichen, was in Figur 14 durch die Pfeile 380 angedeutet ist.

In der Figur 12 und in der Figur 14 ist ein Druckluftspeicher, beziehungsweise eine Druckluftpumpe 400, angedeutet, welche Druckluft in den Druckluftkanal 330 fördert. In der zum Druckluftkanal 330 führenden Leitung sind Druckmessmittel 420 zur Bestimmung des Drucks im Druckluftkanal 330 vorgesehen. Mit den Druckmessmitteln 420 ist verbunden eine Auswerteeinheit 440, welche den von den Druckmessmitteln 420 gemessenen Druck auswertet. Befindet sich der Spannschieber 160 in der Freigabelage, wie in Figur 11 und 12 gezeigt, kann aus dem Druckluftkanal 330 keine Druckluft entweichen. Die Druckmessmittel 420 messen folglich einen vergleichsweise hohen Druck. Die Auswerteeinheit 440 kann folglich hieraus rückschließen, dass sich die Schnellspanneinheit im vollständig geöffneten Zustand befindet beziehungsweise dass sich der wenigstens eine Spannschieber 160 in seiner Freigabelage befindet. Der Spannbolzen 140 kann dann sicher in die Aufnahme 120 eingeführt beziehungsweise aus ihr herausgeführt werden.

Befindet sich hingegen der wenigstens eine Spannschieber 160 in der Spannlage, wie in Figur 13 und 14 gezeigt, entweicht im Druckluftkanal anstehende Druckluft über den Passungsspalt 360. Die Druckmessmittel 420 messen folglich einen geringeren Druck. Die Auswerteeinheit 440 kann folglich hieraus rückschließen, dass sich die Schnellspanneinheit 100 im geschlossenen Zustand befindet, beziehungsweise dass der wenigstens eine Spannschieber 160 sich in der Spannlage befindet.

Anstelle der Druckmessmittel 420 kann auch vorgesehen sein, dass Messmittel zur Messung der Strömungsgeschwindigkeit der Druckluft im Druckluftkanal vorgesehen sind, wobei aus den gemessenen Werten mit der Auswerteeinheit 440 bestimmbar ist, ob sich der Spannschieber 160 in der Spannlage oder in der Freigabelage befindet.

Um vergleichsweise genau bestimmen zu können, dass sich der Spannschieber 160 tatsächlich in seiner Freigabelage befindet, ist vorgesehen, dass die sich in radialer Richtung erstreckende Breite B_{S} des Staudruckabschnitts 280 nahezu gleich breit oder nur geringfügig breiter ist als die sich ebenfalls in radialer Richtung erstreckende Breite B_{D} des Druckluftkanals 330.

Wie aus den Figuren 11 bis 17 ebenfalls deutlich wird, erstreckt sich der Druckluftkanal 330 senkrecht zur Längsachse des Spannschiebers 160.

Mit der in den Figuren 11 bis 17 dargestellten Schnellspanneinheit kann folglich auf vergleichsweise einfache Art und Weise bestimmt werden, ob sich der wenigstens eine Spannschieber 160 in seiner Spannlage oder in seiner Freigabelage befindet. In der Spannlage kann Luft aus dem Druckluftkanal 330 abströmen. Der Druck ist deswegen vergleichsweise nieder. In seiner Freigabelage korrespondiert der Staudruckabschnitt 280 mit dem Druckluftkanal 330. Die Druckluft kann folglich aus dem Druckluftkanal 330, wenn überhaupt, nur sehr geringfügig abströmen. Der Druck im Druckluftkanal 330 steigt entsprechend. Hieraus kann rückgeschlossen werden, dass sich der Spannschieber 160 in der Freigabelage befindet. Über die Auswerteeinheit 440 kann dann ein Signal gegeben werden, dass der Spannbolzen 140 aus der Aufnahme 120 herausgeführt werden kann.

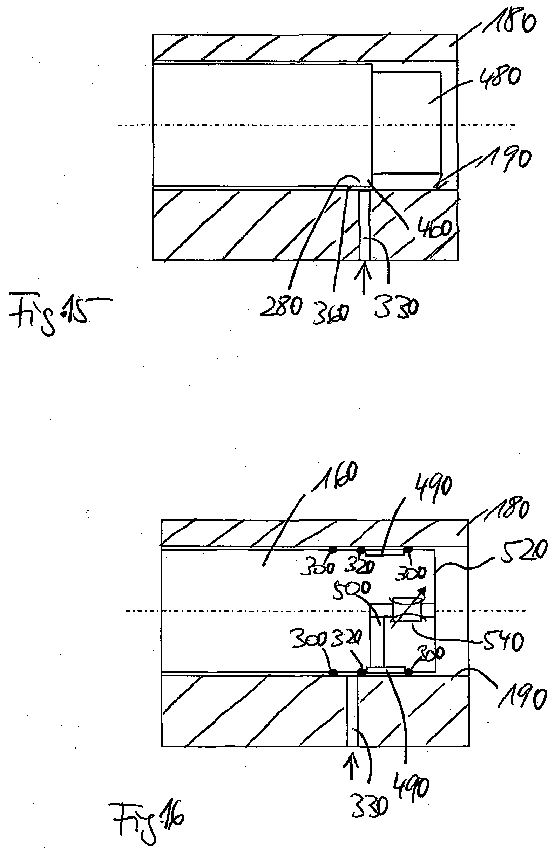

In der Figur 15 ist ein Ausschnitt einer weiteren erfindungsgemäßen Spanneinheit gezeigt, wobei der in der Figur 15 dargestellte Ausschnitt im Wesentlichen dem Ausschnitt gemäß Figur 11 entspricht. Der Spannbolzen 140 sowie die dem Spannbolzen 140 zugewandte Seite des Spannschiebers 160 ist dabei nicht gezeigt. Der Spannschieber 160 befindet sich in der Freigabelage. Entsprechende Bauteile tragen entsprechende Bezugszeichen.

Im Führungsabschnitt 190 ist der Spannschieber 160 geführt gelagert. Der Spannschieber 160 weist auf seiner dem Spannbolzen 140 abgewandten Seite eine zurückversetzte Schulter 460 auf, an welche sich ein nach radial innen verjüngter Endabschnitt 480 anschließt. Anstelle einer derartigen Querschnittsreduzierung des Spannschiebers 160 kann der Spannschieber 160 auch lediglich eine Abflachung an der dem Druckluftkanal 330 zugewandten Seite vorsehen.

Bei der Figur 15 korrespondiert der Staudruckabschnitt 280 des Spannschiebers 160 mit dem Druckluftkanal 330. Aufgrund des Passungsspalts 360 zwischen dem Spannschieber 160 und dem Führungsabschnitt 190 kann bei mit dem Staudruckabschnitt 280 korrespondierendem Druckluftkanal 330 Druckluft in geringfügigen Mengen aus dem Druckluftkanal 330 abströmen. Die geometrische Lage der Schulter 460 ist dabei so gewählt, dass dann, wenn sich der Spannschieber 160 aus der Freigabelage in Richtung Spannlage bewegt, die Schulter 460 den Druckluftkanal 330 passiert und diesen freigibt. Aufgrund des nach innen zurückversetzten Endabschnitts 480 wird der Druckluftkanal 330 großflächig freigegeben, so dass im Druckluftkanal 330 ein Druckabfall stattfindet beziehungsweise sich die Strömungsgeschwindigkeit der Druckluft deutlich erhöht. Aufgrund des unterschiedlichen Drucks beziehungsweise der unterschiedlichen Strömungsgeschwindigkeit kann, wie in Figur 12 und 14 beschrieben, über geeignete Messmittel 420 und eine geeignete Auswerteeinheit 440 bestimmt werden, ob sich der Spannschieber 160 in der Spannlage oder in der Freigabelage befindet.

Der in der Figur 16 dargestellte Ausschnitt einer weiteren erfindungsgemäßen Schnellspanneinheit entspricht im Wesentlichen dem Ausschnitt, wie in der Figur 15 gezeigt ist. Entsprechende Bauteile sind mit entsprechenden Bezugszeichen versehen. Der Spannschieber 160 ist in der Figur 16 in der Freigabelage dargestellt. Der Druckluftkanal 330 korrespondiert hierbei mit dem Staudruckabschnitt 280 des Spannschiebers 160. Der Staudruckabschnitt 280 ist von zwei Dichtringen 300, 320 begrenzt.

Wird der Spannschieber 160 aus der Freigabelage in die Verriegelungslage bewegt, so korrespondiert der Druckluftkanal 330 bei Verlassen der Freigabelage über eine im Spannschieber vorgesehene, umlaufende Ringnut 490 mit einem in dem Spannschieber 160 vorgesehenen Ablasskanal 500. Der Ablasskanal 500 mündet an der Stirnseite 520 des Spannschiebers 160 ins Freie. Im Ablasskanal 500 ist eine verstellbare Drossel 540 vorgesehen. Über die Drossel 540 kann der Strömungswiderstand beziehungsweise die Strömungsgeschwindigkeit der Druckluft im Ablasskanal 500 definiert eingestellt werden. Somit kann der Druckunterschied der Druckluft beziehungsweise der Unterschied der Strömungsgeschwindigkeit der Druckluft im Druckluftkanal 330 in den beiden Lagen Freigabelage und Spannlage eingestellt werden. Über die Messmittel beziehungsweise die Auswerteeinheit kann dann eine genaue Aussage gemacht werden, wann insbesondere die Freigabelage verlassen wird.

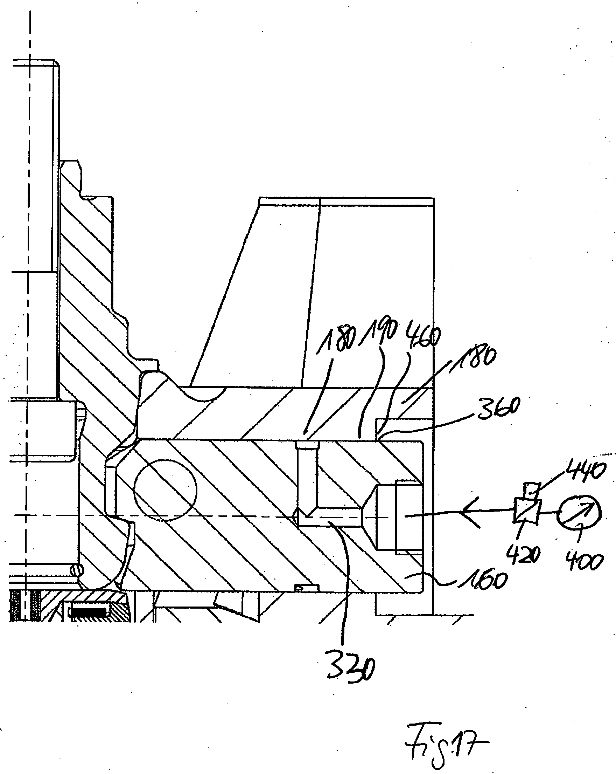

Der in der Figur 17 gezeigte Ausschnitt einer weiteren erfindungsgemäßen Schnellspanneinheit entspricht im Wesentlichen dem Ausschnitt der Figur 11, wobei auch hier entsprechende Bauteile mit entsprechenden Bezugszeichen versehen sind. Allerdings ist hier der Spannschieber in der Spannlage gezeigt. Die Ausführungsform gemäß Figur 17 unterscheidet sich von den anderen, in den Figuren 11 bis 0 gezeigten Ausführungsformen dadurch, dass hier der mit einem Druckluftspeicher 400 verbundene Druckluftkanal 320 nicht im Gehäuse 180, sondern im Spannschieber 160 vorgesehen ist. In der in der Figur 17 dargestellten Spannlage wird der Druckluftkanal 330 von einem vom Führungsabschnitt 190 gebildeten Staudruckabschnitt 280 verschlossen. Über den Passungsspalt 360 zwischen Führungsabschnitt 190 und Spannschieber 160 kann Druckluft gegebenenfalls in geringer Menge abströmen.

Wird die Freigabelage erreicht, so passiert das den Führungsabschnitt 190 zugewandte, freie Ende des Druckluftkanals 330 eine gehäuseseitige Schulter 460. Dadurch wird der Druckluftkanal 330 großflächig freigegeben. Im Druckluftkanal 330 findet dadurch ein Druckabfall statt beziehungsweise die Strömungsgeschwindigkeit erhöht sich spürbar. Mit den Messmitteln 420 kann dies gemessen werden. Mit der Auswerteeinheit 440 kann festgestellt werden, in welcher Lage sich der Spannschieber 160 letztlich befindet.

Die in Figur 17 dargestellte Ausführungsform hat den Vorteil, dass sämtliche Bauteile, mit welchen die Position des Spannschiebers 160 bestimmt wird, außerhalb des Gehäuses 180 angeordnet werden können.

## Patentansprüche

1. Spann- oder Greifvorrichtung (10, 50, 100) mit wenigstens einer in einem Führungsabschnitt (14, 190) verlagerbaren Grundbacke (12, 160), wobei die Grundbacke (12, 160) über eine Mechanik mit einem Stellelement (18, 240) bewegungsgekoppelt und in eine Spannlage und in eine Freigabelage verlagerbar ist, wobei die Grundbacke (12, 160) einen Backenkanal (28, 360, 500) aufweist, wobei Messmittel (42, 420) zur Messung des Drucks und/oder der Strömungsgeschwindigkeit von Druckluft sowie eine Auswerteeinheit (44, 440) derart vorgesehen sind, dass mit der Auswerteeinheit (44, 440) aufgrund der gemessenen Werte bestimmbar ist, ob sich die Grundbacke (16, 160) in der Spannlage und/oder in der Freigabelage befindet, **dadurch gekennzeichnet, dass** der Führungsabschnitt (14, 190) einen an die Druckluftversorgung (34, 400) anschließbaren Druckluftkanal (30, 330) derart aufweist, dass die Grundbacke (12, 160) in der Spannlage bzw. in der Freigabelage eine Mündung (36) des Druckluftkanals (30) verschließt und/oder in der Freigabelage bzw. in der Spannlage die Mündung (36) des Druckluftkanals (30) mit einer Mündung (38) des Backenkanals (28, 360, 500) wenigstens abschnittsweise korrespondiert, wobei aus dem Luftdruck und/oder der Strömungsgeschwindigkeit im Druckluftkanal von der Messeinheit rückgeschlossen wird, ob sich die Grundbacke (16, 160) in der Spannlage und/oder in der Freigabelage befindet.

2. Vorrichtung (10, 50, 100) nach Anspruch 1, **dadurch gekennzeichnet, dass** die Mündung (36) des Druckluftkanals (30) auf der der Unterseite der Grundbacke (12) zugewandten Seite des Führungsabschnitts (14) und die Mündung (38) des Backenkanals (28) auf der Unterseite der Grundbacke (12) vorgesehen ist.

3. Vorrichtung (10, 50) nach Anspruch 1 oder 2, **dadurch gekennzeichnet, dass** die Grundbacke (12) zwei Backenkanäle (28) und der Führungsabschnitt (14) zwei Druckluftkanäle (30) derart aufweist, dass der eine Backenkanal (28) mit dem einen Druckluftkanal (30) in der Freigabelage korrespondiert und der andere Backenkanal (28) mit dem anderen Druckluftkanal (30) in der Spannlage korrespondiert.

4. Vorrichtung (50) nach einem der Ansprüche 1, 2 oder 3, **dadurch gekennzeichnet, dass** in der Grundbacke (12) ein den Backenkanal (28) wenigstens abschnittsweise bildendes Stellmittel (52, 54) vorgesehen ist, mit dem die Lage der Mündung (38) des Backenkanals (28) relativ zur Mündung (36) des Druckluftkanals (30) verstellbar ist.

5. Vorrichtung (50) nach Anspruch 4, **dadurch gekennzeichnet, dass** das Stellmittel als senkrecht zur Verfahrrichtung der Grundbacke (12) um eine Drehachse (56) verdrehbarer Stellbolzen (52, 54) ausgebildet ist, der auf der dem Druckluftkanal (30) zugewandte Seite, exzentrisch zur Drehachse (56) die Mündung (38) des Backenkanals (28) aufweist.

6. Vorrichtung (50) nach Anspruch 4 oder 5, **dadurch gekennzeichnet, dass** der Stellbolzen (52, 54) eine auf der seiner Mündung (38) abgewandten Seite seines Kanalabschnitts (80) eine Auslassöffnung aufweist, die dem grundbackenseitigen Abschnitt (78) des Backenkanals (28) korrespondiert.

7. Vorrichtung (50) nach einem der vorhergehenden Ansprüche, **dadurch gekennzeichnet, dass** der Druckluftkanal (30) im Führungsabschnitt (14) mehrere Mündungen (36, 36.1) aufweist, die dazu vorgesehen sind, mit unterschiedlichen Mündungen unterschiedlicher in den Führungsabschnitt (14) einsetzbarer Grundbacken zu korrespondieren.

8. Vorrichtung (100) nach einem der vorherigen Ansprüche, ausgebildet als Schnellspanneinheit, mit einer zentralen Aufnahme (120) zum Einführen und zum fixierten Spannen eines Spannbolzens (160), wobei die Grundbacke als Spannschieber (160) ausgebildet ist und der Spannschieber (160) mit dem Stellelement (240) bewegungsgekoppelt ist.

9. Spann- oder Greifvorrichtung (10, 50, 100) mit wenigstens einer in einem Führungsabschnitt (14, 190) eines Gehäuses (180) verlagerbaren Grundbacke (12, 160), wobei die Grundbacke (12, 160) über eine Mechanik mit einem Stellelement (18, 240) bewegungsgekoppelt und in eine Spannlage und in eine Freigabelage verlagerbar ist, wobei die Grundbacke (12, 160) einen Backenkanal (28, 360, 500) aufweist, wobei Messmittel (42, 420) zur Messung des Drucks und/oder der Strömungsgeschwindigkeit von Druckluft sowie eine Auswerteeinheit (44, 440) derart vorgesehen sind, dass mit der Auswerteeinheit (44, 440) aufgrund der gemessenen Werte bestimmbar ist, ob sich die Grundbacke (16, 160) in der Spannlage und/oder in der Freigabelage befindet" **dadurch gekennzeichnet, dass** die wenigstens eine Grundbacke (160) einen Staudruckabschnitt (280) und das Gehäuse (180) einen Druckluftkanal (330) derart aufweisen, dass der Staudruckabschnitt (280) mit dem Druckluftkanal (330) so korrespondiert, dass der im Druckluftkanal (330) anstehende Luftdruck und/oder die im Druckluftkanal (330) vorherrschende Strömungsgeschwindigkeit der Druckluft in der Freigabelage unterschiedliche Werte aufweist als in der Spannlage, wobei aus den Werten von der Messeinheit rückgeschlossen wird, ob sich die Grundbacke (16, 160) in der Spannlage und/oder in der Freigabelage befindet.

10. Vorrichtung (100) nach Anspruch 9, **dadurch gekennzeichnet, dass** bei mit dem Druckluftkanal (330) korrespondierendem Staudruckabschnitt (280) der Staudruckabschnitt (280) den Druckluftkanal (330) wenigstens weitgehend dicht verschließt und dass bei mit dem Druckluftkanal (330) nicht korrespondierendem Staudruckabschnitt (280) Druckluft aus dem Druckluftkanal (330) entweichen kann.

11. Vorrichtung (100) nach Anspruch 9, **dadurch gekennzeichnet, dass** der Staudruckabschnitt (28) als Ringabschnitt ausgebildet ist, der von Dichtringen (30, 32) umschlossen ist.

12. Vorrichtung (100) nach Anspruch 9, 10 oder 11, **dadurch gekennzeichnet, dass** bei mit dem Druckluftkanal (330) korrespondierendem oder nicht korrespondierendem Staudruckabschnitt (280) Druckluft über einen zwischen dem Führungsabschnitt (190) und der Grundbacke (160) vorgesehenen Passungsspalt (360) entweichen kann.

13. Vorrichtung (100) nach Anspruch 9, 10 oder 11, **dadurch gekennzeichnet, dass** die Grundbacke (160) mit dem Führungsabschnitt (190) eine zurück versetzte Schulter (460) derart aufweist, dass der Druckluftkanal (330) bei mit dem Druckluftkanal (330) nicht korrespondierendem Staudruckabschnitt (280) freigegeben wird.

14. Vorrichtung (100) nach dem vorhergehenden Anspruch, **dadurch gekennzeichnet, dass** im Backenkanal (500) oder im oder am Druckluftkanal (30) eine Drossel (540) zur definierten Einstellung des Luftablasses vorgesehen ist.

## Claims

1. A clamping or gripping device (10, 50, 100), having at least one bottom jaw (12, 160) that is displaceable in a guide portion (14, 190), the bottom jaw (12, 160) being motion-coupled via a mechanism to an adjusting element (18, 240) and being displaceable into a clamping position and into a release position, and the bottom jaw (12, 160) having a jaw channel (28, 360, 500), measurement means (42, 420) being provided for measuring the pressure and/or the flow speed of compressed air and an evaluation unit (44, 440) being provided in such a way that with the evaluation unit (44, 440), it can be determined on the basis of the measured values whether the bottom jaw (16, 160) is in the clamping position and/or in the release position, **characterized in that** the guide portion (14, 190) has a compressed air channel (30, 330) that is connectable to the compressed air supply (34, 400), such that in the clamping position or in the release position, the bottom jaw (12, 160) closes a mouth (36) of the compressed air channel (30), and/or in the release position or in the clamping position, the mouth (36) of the compressed air channel (30) corresponds in at least in some portions with a mouth (38) of the jaw channel (28, 360, 500), and it can be concluded from the measurement unit on the basis of the air pressure and/or the flow speed in the compressed air channel whether the bottom jaw (16, 160) is in the clamping position and/or the release position.

2. The device (10, 50, 100) of claim 1, **characterized in that** the mouth (36) of the compressed air channel (30) is provided on the side of the guide portion (14) oriented toward the underside of the bottom jaw (12), and the mouth (38) of the jaw channel (28) is provided on the on the underside of the bottom jaw (12).

3. The device (10, 50) of claim 1 or 2, **characterized in that** the guide portion (12) has two jaw channels (28) and the guide portion (14) has two compressed air channels (30), in such a way that in the release position, one jaw channel (28) corresponds with one compressed air channel (30), and in the clamping position, the other jaw channel (28) corresponds with the other compressed air channel (30).

4. The device (50) of one of claims 1, 2 or 3, **characterized in that** in the bottom jaw (12), an adjusting means (52, 54) is provided for forming the jaw channel (28) in at least some portions is provided, with which the location of the mouth (38) of the jaw channel (28) is adjustable relative to the mouth (36) of the compressed air channel (30).

5. The device (50) of claim 4, **characterized in that** the adjusting means is embodied as an adjusting bolt (52, 54), which is rotatable perpendicular to the travel direction of the bottom jaw (12) about an axis of rotation (56) and which, on the side oriented toward the compressed air channel (30), eccentrically to the axis of rotation (56), has the mouth (38) of the jaw channel (28).

6. The device (50) of claim 4 or 5, **characterized in that** the adjusting bolt (52, 54), on the side of its channel portion (80) remote from its mouth (38), has an outlet opening which corresponds with the portion (78), toward the bottom jaw, of the jaw channel (28).

7. The device (50) of one of the foregoing claims, **characterized in that** the compressed air channel (30) has a plurality of mouths (36, 36.1) in the guide portion (14), which are provided in order to correspond with different mouths of different bottom jaws that can be inserted into the guide portion (14).

8. The device (100) of one of the foregoing claims, embodied as a fast-action clamping unit, having a central receptacle (120) for introducing and fixedly clamping a clamping bolt (160), and the bottom jaw is embodied as a clamping slide (160), and the clamping slide (160) is motion-coupled to the adjusting element (240).

9. A clamping or gripping device (10, 50, 100), having at least one bottom jaw (12, 160) that is displaceable in a guide portion (14, 190) of a housing (180), the bottom jaw (12, 160) being motion-coupled via a mechanism to an adjusting element (18, 240) and being displaceable into a clamping position and into a release position, and the bottom jaw (12, 160) having a jaw channel (28, 360, 500), measurement means (42, 420) being provided for measuring the pressure and/or the flow speed of compressed air and an evaluation unit (44, 440) being provided in such a way that with the evaluation unit (44, 440), it can be determined on the basis of the measured values whether the bottom jaw (16, 160) is in the clamping position and/or in the release position, **characterized in that** the at least one bottom jaw (160) has a dynamic pressure portion (280) and the housing (180) has a compressed air channel (330) such that the dynamic pressure portion (280) corresponds with the compressed air channel (330) in such a way that the air pressure present in the compressed air channel (330) and/or the flow speed prevailing in the compressed air channel (330) has different values in the release position compared to the clamping position, and on the basis of the values from the measurement unit, it can be concluded whether the bottom jaw (16, 160) is in the clamping position and/or in the release position.

10. The device (100) of claim 9, **characterized in that** when the dynamic pressure portion (280) corresponds with the compressed air channel (330), the dynamic pressure portion (280) at least extensively tightly closes the compressed air channel (330), and that when the dynamic pressure portion (280) does not correspond with the compressed air channel (330), compressed air can escape from the compressed air channel (330).

11. The device (100) of claim 9, **characterized in that** the dynamic pressure portion (28) is embodied as an annular portion that is surrounded by sealing rings (30, 32).

12. The device (100) of claim 9, 10 or 11, **characterized in that** whether the dynamic pressure portion (280) corresponds or does not correspond with the compressed air channel (330), compressed air can escape via a fitting gap (360) provided between the guide portion (190) and the bottom jaw (160).

13. The device (100) of claim 9, 10 or 11, **characterized in that** the bottom jaw (160) with the guide portion (190) has a recessed shoulder (460), such that when the dynamic pressure portion (280) does not correspond with the compressed air channel (330), the compressed air channel (330) is opened.

14. The device (100) of the foregoing claim, **characterized in that** in the jaw channel (500) or in or on the compressed air channel (30), a choke (540) is provided for adjusting the air bleed-off in a defined way.

## Revendications

1. Dispositif de serrage ou de préhension (10, 50, 100) comprenant au moins une mâchoire de base (12, 160) pouvant être déplacée dans une section de guidage (14, 190), la mâchoire de base (12, 160) étant couplée en mouvement avec un élément de réglage (18, 240) par le biais d'un mécanisme et pouvant être déplacée dans une position de serrage et dans une position de relâchement, la mâchoire de base (12, 160) présentant un canal de mâchoire (28, 360, 500), des moyens de mesure (42, 420) pour mesurer la pression et/ou la vitesse d'écoulement de l'air comprimé ainsi qu'une unité d'évaluation (44, 440) étant prévus, de sorte qu'avec l'unité d'évaluation (44, 440) il est possible de déterminer sur la base des valeurs mesurées si la mâchoire de base (16, 160) se trouve en position de serrage et/ou en position de relâchement, **caractérisé en ce que** la section de guidage (14, 190) présente un conduit d'air comprimé (30, 330) pouvant être raccordé à l'alimentation en air comprimé (34, 400), de sorte que la mâchoire de base (12, 160) en position de serrage ou en position de relâchement ferme un orifice (36) du conduit d'air comprimé (30) et/ou en position de relâchement ou en position de serrage fait correspondre au moins par endroits l'orifice (36) du conduit d'air comprimé (30) avec un orifice (38) du canal de mâchoire (28, 360, 500), dans lequel il est déduit par l'unité de mesure à partir de la pression d'air et/ou de la vitesse d'écoulement dans le conduit d'air comprimé si la mâchoire de base (16, 160) se trouve en position de serrage et/ou en position de relâchement.

2. Dispositif (10, 50, 100) selon la revendication 1, **caractérisé en ce que** l'orifice (36) du conduit d'air comprimé (30) est prévu sur le côté orienté vers la face inférieure de la mâchoire de base (12) de la section de guidage (14) et l'orifice (38) du canal de mâchoire (28) sur la face inférieure de la mâchoire de base (12).

3. Dispositif (10, 50) selon la revendication 1 ou 2, **caractérisé en ce que** la mâchoire de base (12) présente deux canaux de mâchoire (28) et la section de guidage (14) deux conduits d'air comprimé (30), de sorte qu'un canal de mâchoire (28) correspond à un conduit d'air comprimé (30) en position de relâchement et l'autre canal de mâchoire (28) correspond à l'autre conduit d'air comprimé (30) en position de serrage.

4. Dispositif (50) selon l'une des revendications 1, 2 ou 3, **caractérisé en ce qu'**il est prévu dans la mâchoire de base (12) un moyen de réglage (52, 54) formant au moins par endroits le canal de mâchoire (28), par le biais duquel il est possible de régler la position de l'orifice (38) du canal de mâchoire (28) par rapport à l'orifice (36) du conduit d'air comprimé (30).

5. Dispositif (50) selon la revendication 4, **caractérisé en ce que** le moyen de réglage est réalisé sous la forme d'un boulon de réglage (52, 54) pouvant pivoter autour d'un axe de rotation (56) perpendiculairement au sens de déplacement de la mâchoire de base (12), lequel boulon de réglage présente sur le côté orienté vers le conduit d'air comprimé (30) de façon excentrée par rapport à l'axe de rotation (56) l'orifice (38) du canal de mâchoire (28).

6. Dispositif (50) selon la revendication 4 ou 5, **caractérisé en ce que** le boulon de réglage (52, 54) présente sur le côté orienté à l'opposé de son orifice (38) de sa section de canal (80) une ouverture de sortie qui correspond à la section côté mâchoire de base (78) du canal de mâchoire (28).

7. Dispositif (50) selon l'une des revendications précédentes, **caractérisé en ce que** le conduit d'air comprimé (30) dans la section de guidage (14) présente plusieurs orifices (36, 36.1) qui sont prévus pour correspondre avec différents orifices de différentes mâchoires de base pouvant être insérées dans la section de guidage (14).

8. Dispositif (100) selon l'une des revendications précédentes, réalisé sous la forme d'une unité de serrage rapide, comprenant un logement central (120) pour introduire et pour serrer de façon fixe un boulon de serrage (160), la mâchoire de base étant réalisée sous la forme d'un coulisseau de serrage (160), et le coulisseau de serrage (160) étant couplé en mouvement avec l'élément de réglage (240).

9. Dispositif de serrage ou de préhension (10, 50, 100) comprenant au moins une mâchoire de base (12, 160) pouvant être déplacée dans une section de guidage (14, 190) d'un boîtier (180), la mâchoire de base (12, 160) étant couplée en mouvement avec un élément de réglage (18, 240) par le biais d'un mécanisme et pouvant être déplacée dans une position de serrage et dans une position de relâchement, la mâchoire de base (12, 160) présentant un canal de mâchoire (28, 360, 500), des moyens de mesure (42, 420) pour mesurer la pression et/ou la vitesse d'écoulement de l'air comprimé ainsi qu'une unité d'évaluation (44, 440) étant prévus, de sorte qu'avec l'unité d'évaluation (44, 440) il est possible de déterminer, sur la base des valeurs mesurées, si la mâchoire de base (16, 160) se trouve en position de serrage et/ou en position de relâchement, **caractérisé en ce que** ladite au moins une mâchoire de base (160) présente une section de pression dynamique (280) et le boîtier (180) un conduit d'air comprimé (330), de façon que la section de pression dynamique (280) correspond au conduit d'air comprimé (330) de sorte que la pression d'air qui règne dans le conduit d'air comprimé (330) et/ou la vitesse d'écoulement de l'air comprimé qui domine dans le conduit d'air comprimé (330) présente en position de relâchement, des valeurs différentes qu'en position de serrage, dans lequel on détermine à partir des valeurs de l'unité de mesure si la mâchoire de base (16, 160) se trouve en position de serrage et/ou en position de relâchement.

10. Dispositif (100) selon la revendication 9, **caractérisé en ce que**, lorsque la section de pression dynamique correspond au conduit d'air comprimé (330), la section de pression dynamique (280) ferme le conduit d'air comprimé de façon au moins largement étanche, et **en ce que** lorsque la section de pression dynamique ne correspond pas au conduit d'air comprimé (330), de l'air comprimé peut s'échapper du conduit d'air comprimé (330).

11. Dispositif (100) selon la revendication 9, **caractérisé en ce que** la section de pression dynamique (28) est réalisée sous la forme d'une section annulaire qui est entourée de joints d'étanchéité (30, 32).

12. Dispositif (100) selon la revendication 9, 10 ou 11, **caractérisé en ce que**, lorsque la section de pression dynamique (280) correspond ou ne correspond pas au conduit d'air comprimé (330), de l'air comprimé peut s'échapper par une fente d'ajustement (360) prévue entre la section de guidage (190) et la mâchoire de base (160).

13. Dispositif (100) selon la revendication 9, 10 ou 11, **caractérisé en ce que** la mâchoire de base (160) présente avec la section de guidage (190) un épaulement placé en retrait (460) de sorte que le conduit d'air comprimé (330), lorsque la section de pression dynamique (280) ne correspond pas au conduit d'air comprimé (330), est relâché.

14. Dispositif (100) selon la revendication précédente, **caractérisé en ce qu'**il est prévu dans le canal de mâchoire (500) ou dans ou sur le conduit d'air comprimé (30) un étrangleur (540) pour un réglage défini de l'évacuation d'air.
